(19) Europäisches Patentamt
European Patent Office
Office européen des brevets

(11) EP 3 778 045 A1

(12) **EUROPEAN PATENT APPLICATION**
published in accordance with Art. 153(4) EPC

(43) Date of publication:
**17.02.2021 Bulletin 2021/07**

(21) Application number: **19785793.1**

(22) Date of filing: **12.04.2019**

(51) Int Cl.:
***B09C 1/08*** *(2006.01)* ***C02F 1/28*** *(2006.01)*
***C02F 1/62*** *(2006.01)*

(86) International application number:
**PCT/KR2019/004427**

(87) International publication number:
**WO 2019/199109 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.04.2018 KR 20180042641**

(71) Applicant: **FNG Research Co., Ltd.**
**Chungcheongbuk-do 28359 (KR)**

(72) Inventors:
- **GOO, Young Sam**
  **Chungcheongnam-do 32292 (KR)**
- **SON, Ki Nam**
  **Chungcheongbuk-do 28407 (KR)**

(74) Representative: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **COMPOUND FOR RESTORING CONTAMINATED SOIL OR CONTAMINATED WATER**

(57) The present invention provides a compound for restoring contaminated soil or contaminated water for the removal of heavy metals and formaldehyde, comprising at least one selected from a trientine or a trientine derivative represented by Formula (1), a cyclen or a cyclen derivative represented by Formula (2), and a cyclam or cyclam derivative represented by Formula (3) as an active ingredient.

EP 3 778 045 A1

## Description

### TECHNICAL FIELD

The present invention relates to compounds for restoring contaminated soil or water by removing heavy metals and formaldehyde in soil or water.

### BACKGROUND ART

Today, various harmful substances emitted from urbanization, industrialization, and reckless resource development cause air pollution, soil pollution and water pollution, so that they adversely affect the human body and the environment.

Investigation of soil pollution in the industrial complex conducted by the Ministry of Environment of South Korea in 2012 reported soil and groundwater were contaminated in 34 sites (5%) among 693 sites of 5 industrial complexes, and 13 sites among 34 sites were contaminated with heavy metals such as copper, lead, arsenic, mercury, cadmium, and chromium. It is reported that the concentration of heavy metals in the soils of industrial complexes, industrial areas, urban waste treatment areas and abandoned mines/coal mines areas was several hundred times higher than that of natural soil in general areas.

In recent years, it is reported that heavy metals exceeding the standard are detected in urethane artificial turf installed in the school playgrounds, so the seriousness of the problem is increasing.

Since heavy metals in the soil flow into the groundwater by rainwater, they may cause fatal diseases such as Minamata disease, Itai-itai disease, and cancer, so that it is very important not only to prevent contamination of heavy metals in advance but also to restore contaminated soil.

On the other hand, formaldehyde which is a volatile organic compound, and formalin which is aqueous solution of formaldehyde, are widely used in industries such as preservatives, adhesives for preservative wood and wood products, and silk fabrics. Once formalin flowed into the soil due to carelessness in the manufacturing plant, the treatment is very difficult, causing serious contamination of groundwater as well as soil. For example, the unauthorized discharge of formalin into the Han River by USFK in 2000 shows its seriousness.

Now, since soil contamination and water contamination are out of the natural purification capacity of the ecosystem, it is required.to effort to efficiently remove heavy metals and formaldehyde in soil and water.

### DISCLOSURE OF INVENTION

### TECHNICAL PROBLEM

To solve the above problem, an object of the present invention is to provide compounds for restoring contaminated soil or contaminated water that can effectively remove various heavy metals and formaldehyde in soil or water.

### SOLUTION TO PROBLEM

In order to achieve the above object, the present invention provides a composition for restoring contaminated soil or contaminated water for the removal of heavy metals and formaldehyde, comprising at least one selected from the group consisting of trientine or trientine derivative of Formula (1), cyclen or cyclen derivative of Formula (2), cyclam or cyclam derivative of Formula (3) as an active ingredient.

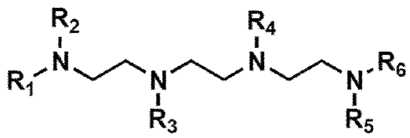

**(1)**

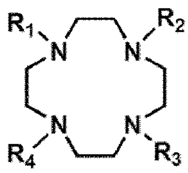

**(2)**

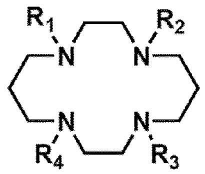

(3)

wherein: $R_1$, $R_2$, $R_3$, $R_4$, $R_5$ and $R_6$ is each independently hydrogen, - $R_7$-COOH and salts thereof; $R_7$ is a C1-C5 alkyl group, an unsubstituted or substituted aromatic hydrocarbon group, or an unsubstituted or substituted aromatic 6 membered or 5 membered heterocyclic ring.

The effective ingredient for removing heavy metals and formaldehyde is preferably selected from trientine of Formula (1a), cyclen of Formula (2a), and cyclam of Formula (3a).

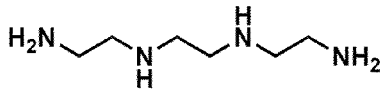

(1a)

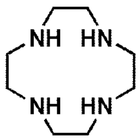

(2a)

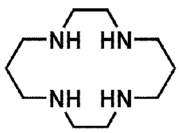

(3a)

The trientine derivative is preferably selected from compounds of Formula (1b) to (1d) or a salt thereof.

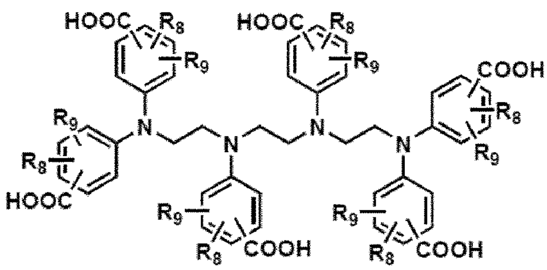

(1b)

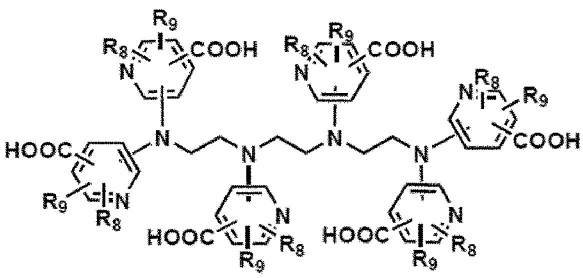

(1c)

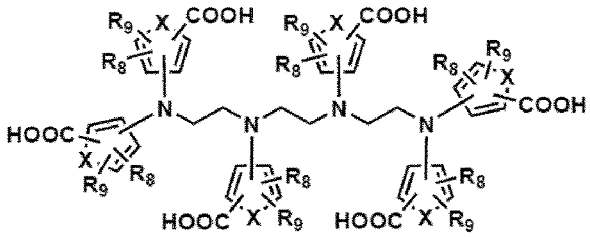

(1d)

wherein: $R_8$, $R_9$ is each independently hydrogen or $C_1$-$C_4$ alkyl; X is oxygen(O), sulfur(S) or nitrogen(N).

The cyclen derivative is preferably selected from compounds of Formula (2b) to (2d) or a salt thereof.

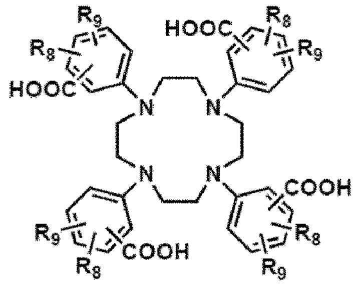

(2b)

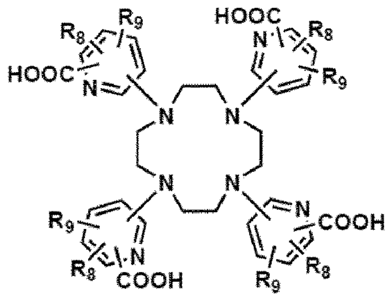

(2c)

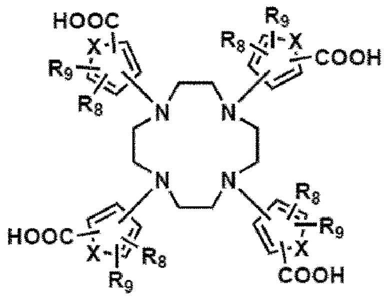

(2d)

wherein: $R_8$, $R_9$ is each independently hydrogen or $C_1$-$C_4$ alkyl; X is oxygen(O), sulfur(S) or nitrogen(N).

The cyclam derivative is preferably selected from compounds of Formula (3b) to (3d) or a salt thereof.

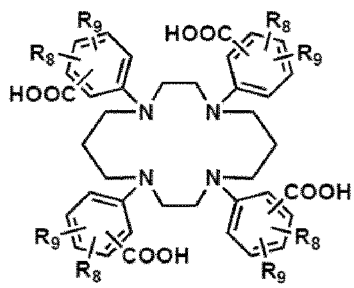

(3b)

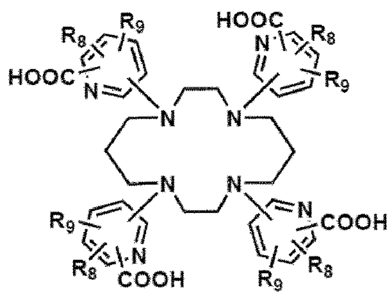

(3c)

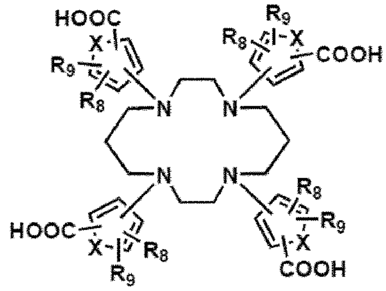

(3d)

wherein: $R_8$, $R_9$ is each independently hydrogen or $C_1$-$C_4$ alkyl; X is oxygen(O), sulfur(S) or nitrogen(N).

## ADVANTAGEOUS EFFECTS OF INVENTION

The compound for restoring contaminated soil or contaminated water according to the present invention effectively removes heavy metals and formaldehyde even in a small amount, and causes no or very low skin irritation or toxicity to human body, so that it can be efficiently used for restoring contaminated soil or contaminated water.

## MODE FOR CARRYING OUT THE INVENTION

The inventors of the present invention have conducted various studies on heavy metal chelating agents in order to develop compounds capable of effectively removing heavy metals in contaminated soil.

It was confirmed in the present invention that trientine, cyclen, cyclam and derivatives thereof are very excellent in removing heavy metal ions in soil or water, and cause no or low irritation or toxicity to the human body, so that they can be efficiently used for restoring the contaminated soil or contaminated water. In further experiments, it was confirmed that trientine, cyclen, cyclam and derivative thereof are very effective in removing formaldehyde (formalin), which is an environmental hormone and a very toxic substance. In addition, from results of synthesizing and experimenting with novel compounds derived from the above compounds, it was confirmed that the introduction of a carboxy group improves heavy metals removal, while when substituted with an aromatic or heterocycle at the amine position, skin stimulation or toxicity is significantly reduced.

On the other hand, the present invention provides novel trientine derivative of Formula (1), novel cyclen derivative of Formula (2), novel cyclam derivative of Formula (3).

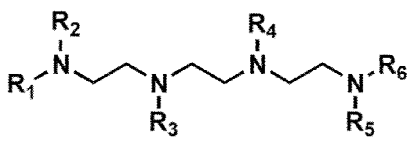

(1)

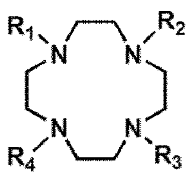

(2)

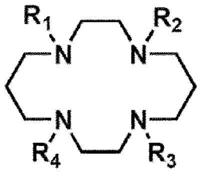

(3)

wherein: $R_1$, $R_2$, $R_3$, $R_4$, $R_5$ and $R_6$ is each independently - $R_7$-COOH and salts thereof; $R_7$ is a C2-C5 alkyl group, an unsubstituted or substituted aromatic hydrocarbon group, or an unsubstituted or substituted aromatic 6 membered or 5 membered heterocyclic ring.

The present invention provides a composition for restoring contaminated soil or contaminated water for the removal of heavy metals and formaldehyde, comprising at least one selected from the group consisting of trientine or trientine derivative of Formula (1), cyclen or cyclen derivative of Formula (2), cyclam or cyclam derivative of Formula (3) as an active ingredient.

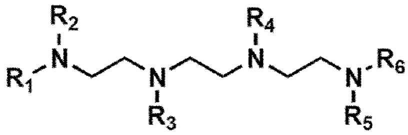

(1)

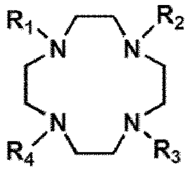

(2)

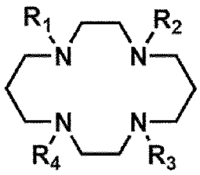

(3)

wherein: $R_1$, $R_2$, $R_3$, $R_4$, $R_5$ and $R_6$ is each independently hydrogen, - $R_7$-COOH and salts thereof; $R_7$ is a C1-C5 alkyl group, an unsubstituted or substituted aromatic hydrocarbon group, or an unsubstituted or substituted aromatic 6 membered or 5 membered heterocyclic ring.

Trientine of the following Formula (1a) is a generic name of Triethylenetetramine (TETA).

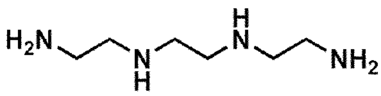

(1a)

Triethylenetetramine dihydrochloride has been shown to participate in the metabolism of copper in mouse experiments (F. W. Sunderman et al., Toxicol. Appl. Pharmacol. 38, 177 (1976)). Triethylenetetramine dihydrochloride is pharmacologically well known as a chelating agent for copper, so is well known as a treatment for Wilson's disease (J. M. Walshe, Prog. Clin. Biol. Res. 34, 271 (1979); R. H. Haslam et al., Dev. Pharmacol Ther. 1, 318 (1980)).

Cyclen of the following Formula (2a) is a generic name of 1,4,7,10-tetraazacyclododecane. It forms a chelate through coordination bond with gadolinium (Gd) and is used for nuclear medical contrast agent.

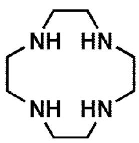

(2a)

Cyclam of the following Formula (3a) is a generic name of 1,4,8,11-tetraazacyclotetradecane. It also forms a

chelate through coordination bond with gadolinium (Gd) and is used for nuclear medical contrast agent.

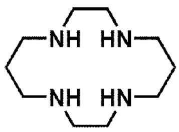

(3a)

Trientine, cyclen and cyclam are pharmaceutically well known for their ability to release copper in the human body via oral or vascular administration methods, or use thereof as a contrast agent, but no studies have been reported for use to restore contaminated soil or water.

The present invention discloses the heavy metals removal ability in contaminated soil and water of trientine, cyclen, and cyclam compounds, and the experimental results of irritation and toxicity to the human body of trientine, cyclen, and cyclam compounds. Trientine, cyclen and cyclam are known to be harmful to the skin in the past, however, it was confirmed from the experiments of the present invention that there is no skin irritation or toxicity, or as low as acceptable in use of an effective amount for removing heavy metals

The compound of the present invention is characterized in that it comprises trientine, cyclen, cyclam or a salt thereof as an active ingredient for removing heavy metals.

On the other hand, it was confirmed that the introduction of a carboxy group at amine position of trientine, cyclen and cyclam improves the ability to remove heavy metals, while the introduction of an aromatic or heterocycle at the amine position significantly reduce skin stimulation or toxicity.

The trientine derivatives, cyclen derivatives and cyclam derivatives according to the present invention are preferably selected from the compounds of the following Formulas (1b) to (3d).

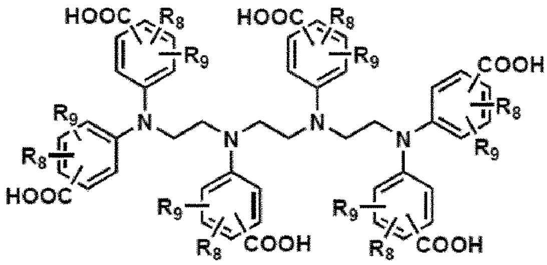

(1b)

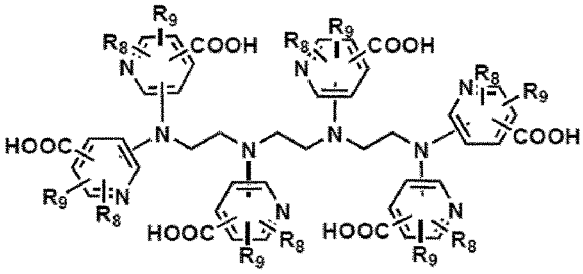

(1c)

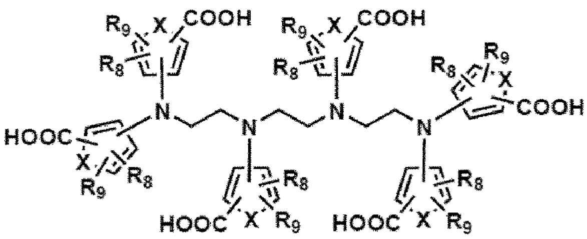

(1d)

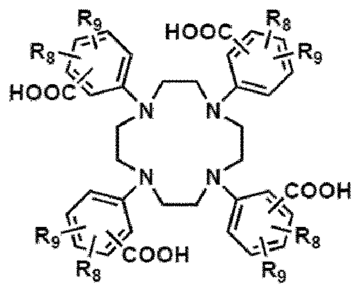

(2b)

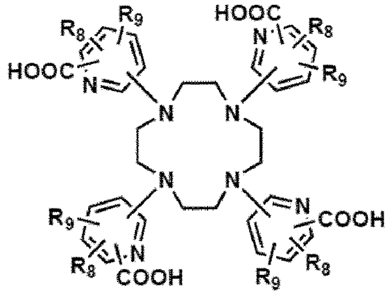

(2c)

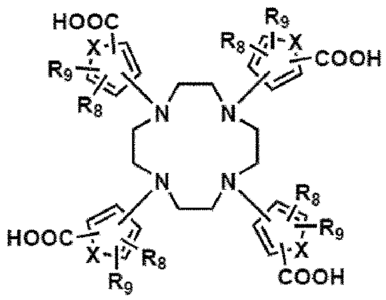

(2d)

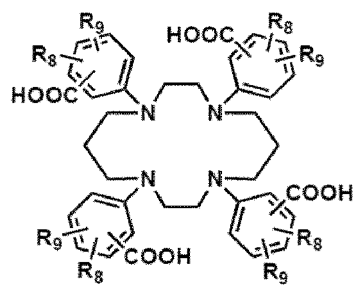

(3b)

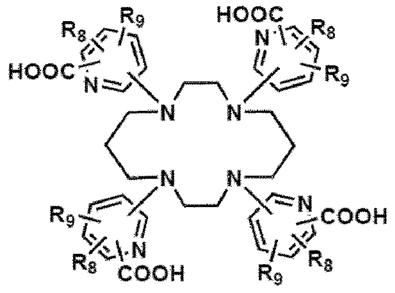

(3c)

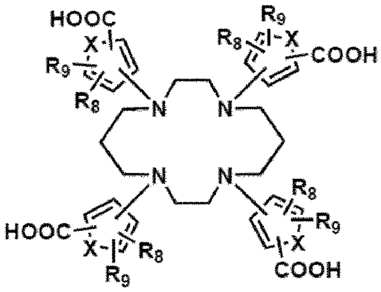

(3d)

wherein: $R_8$, $R_9$ is each independently hydrogen or $C_1$-$C_4$ alkyl; X is oxygen(O), sulfur(S) or nitrogen(N).

The trientine or trientine derivatives, cyclen or cyclen derivatives, cyclam or cyclam derivatives of the present invention is not limited, but may be used for restoring the soil in an aqueous solution of 0.01 to 5.0 wt%, preferably 0.5 to 2.0 wt%.

The trientine or trientine derivatives, cyclen or cyclen derivatives, cyclam or cyclam derivatives of the present invention may be used in the form of water-soluble salt. The above compounds of the present invention may be used in the form of the hydrochloride salt, the sodium salt, or the potassium salt. The above salts of the present invention can be obtained by known methods for preparing the salts.

The compound for restoring the contaminated soil and contaminated water according to the present invention can be used for the removal of heavy metals such as mercury, lead, cadmium, arsenic, chromium, copper, nickel, zinc, manganese, cobalt, tin, cesium-137, uranium-234, radium-226, iridium-192 and plutonium-238.

In addition, the compound for restoring the contaminated soil and contaminated water according to the present invention may be efficiently used for the removal of formaldehyde (formalin) in soil or water.

Hereinafter, the compound for restoring contaminated soil or contaminated water according to the present invention will be described in detail with reference to the following examples. However, the following examples are only illustrative of the present invention and are not to be construed as limiting the scope of the present invention.

## Synthesis of trientine derivative

### Embodiment 1

### Preparation of 3,6,9,12-tetrakis(carboxymethyl)-3,6,9,12-tetraazatetradecanedioic acid (Formula (1e))

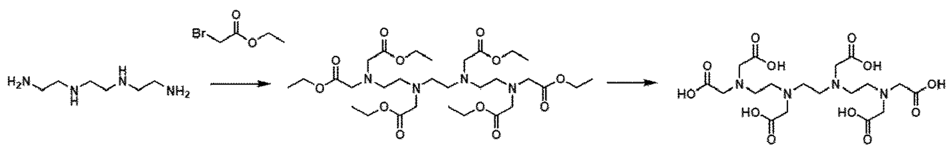

(1e)

Triethylenetetramine (10.0 g) and acetonitrile (ACN) (400 ml) were added and stirred, and then, $K_2CO_3$ (66.1 g) and ethyl bromoacetate (78.8 g) were added, heated, and the mixture was refluxed for 48 hours to complete the reaction. The reaction mixture was cooled to room temperature and filtered, the solid was discarded and the filtrate was concentrated in vacuo. Methylene chloride (MC) (200 ml) and purified water (300 ml) were added to the concentrate, stirred for 30 minutes, and allowed to stand to separate layers. The organic layer was treated with $MgSO_4$, concentrated in vacuo, and then subjected to column purification with MC-methanol. 29.6 g of diethyl 3,6,9,12-tetrakis (2-ethoxy-2-oxoethyl) -3,6,9,12-tetraazatetradecanedioate was obtained(Yield: 64.8%).

$^1H$ NMR ($CDCl_3$): 4.16(q, 8H), 4.14(q, 4H), 3.57(s, 8H), 3.44(s, 4H), 2.85(t, 4H), 2.78(t, 4H), 2.74(s, 4H), 1.27(t, 12H), 1.26(t, 6H)

The prepared diethyl 3,6,9,12-tetrakis (2-ethoxy-2-oxoethyl)-3,6,9,12-tetraazatetradecanedioate (29.6 g), NaOH (12.33 g), methanol (180 ml) and purified water (120 ml) were added and the reaction mixture was heated to 55-60°C, stirred for 12 hours to complete the reaction. After completion of the reaction, the reaction mixture was cooled to 40°C and concentrated in vacuo to remove the solvent. The reaction mixture was adjusted to pH 5-6 with 10% aqueous HCl, stirred for 30 min, and extracted with MC (400 ml). The extracted organic layer was treated with $MgSO_4$. 15.9 g of

the title compound was obtained(Yield: 72.3%).
$^1$H NMR (DMSO): 4.57(s, 8H), 4.55(s, 4H), 4.22(s, 12H)

**Embodiment 2**

**Preparation of 4,4',4",4'"-(((ethane-1,2-diytbis((4-carboxyphenyl)azanediyl))bis(ethane-2,1-diyl))bis(azanetriyl))tetrabenzoic acid (Formula (1f))**

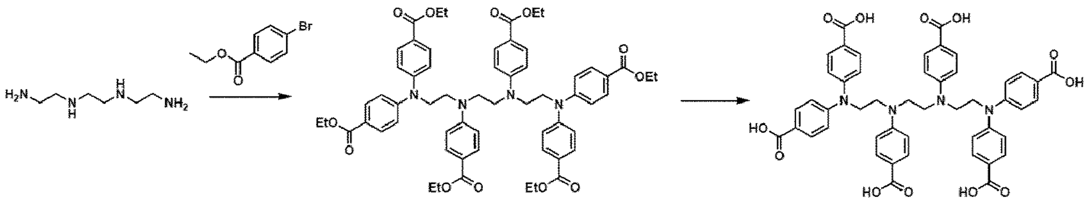

(1f)

Triethylenetetramine (10.0 g), ethyl 4-bromobenzoate (108.1 g), t-BuONa (46.0 g) and toluene (600 ml) were added, stirred, and then heated to 35°C. 50% $(t-Bu)_3P$ toluene solution (2.8 g) was added, stirred for about 30 min and then heated to 50°C. $Pd(dba)_2$ (2.0 g) was added, heated, and stirred under reflux to complete the reaction. The reaction mixture was cooled to room temperature, a purified water (1000 ml) was added, stirred for 30 min, and then an organic layer is separated. An aqueous layer of the reaction mixture was discarded. The organic layer was treated with $MgSO_4$, concentrated in vacuo, and then subjected to column purification with MC-methanol. 22.9 g of tetraethyl 4,4',4",4'"-(((ethane-1,2-diylbis((4-(ethoxycarbonyl)phenyl)azanediyl)) bis(ethane-2,1-diyl))bis(azanetriyl))tetrabenzoate was obtained(Yield: 32.4%)
$^1$H NMR ($CDCl_3$): 7.82(m, 4H), 7.71(m, 8H), 7.25(m, 8H), 6.95(m, 4H), 4.15(q, 8H), 4.11(q, 4H), 3.45~3.18(m, 12H), 1.27(t, 12H), 1.26(t, 6H)

Tetraethyl 4,4',4",4'"-(((ethane-1,2-diylbis((4-(ethoxycarbonyl)phenyl)azanediyl)) bis(ethane-2,1-diyl))bis(azanetriyl))tetrabenzoate (22.9 g), NaOH (6.1 g), methanol (180 ml) and purified water (140 ml) were added and the reaction mixture was heated to 55-60°C, stirred for 12 hours to complete the reaction. The reaction mixture was cooled to about 40°C and concentrated in vacuo to remove the solvent. The reaction mixture was adjusted to pH 5-6 with 10% aqueous HCl, stirred for 30 min, and extracted with MC (200 ml). The extracted organic layer was treated with $MgSO_4$. 17.0 g of the title compound was obtained (Yield: 89.0%).

$^1$H NMR (DMSO): 7.80(m, 4H), 7.68(m, 8H), 7.15(m, 8H), 6.94(m, 4H), 3.41~3.28(m, 12H)

**Embodiment 3**

**Preparation of 5,5'-((2-((5-carboxypyridin-3-yl)(2-((5-carboxypyridin-3-yl)(2-((5-carboxypyridin-3-yl)(2-carboxypyridin-4-yl)amino)ethyl)amino)ethyl)amino)ethyl)azanediyl)dinicotinic acid (Formula (1g))**

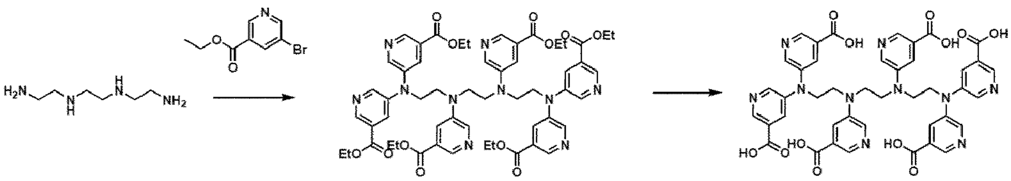

(1g)

Triethylenetetramine (10.0 g), ethyl 5-bromonicotinate (108.5 g), t-BuONa (46.0 g) and xylene (600 ml) were added, stirred, and then heated to 35°C, and 50% $(t-Bu)_3P$ toluene solution (2.8 g) was added, stirred for about 30 min and then heated to 50°C, $Pd(dba)_2$ (2.0 g) was added, heated under reflux to complete the reaction. The reaction mixture was cooled to room temperature. a purified water (1000 ml) was added, stirred for 30 min, and to separate layers. An

aqueous layer of the reaction mixture was discarded. The organic layer was treated with $MgSO_4$, concentrated diethyl 5,5'-((2-((5-(ethoxycarbonyl)pyridin-3-yl)(2-((5-(ethoxycarbonyl)pyridin-3-yl)(2-((5-(ethoxycarbonyl)pyridin-3-yl)(2-(ethoxycarbonyl)pyridin-4-yl)amino)ethyl)amino)ethyl)amino)ethyl)azanediyl)dinicotinate was obtained(Yield: 27.8%).

$^1$H NMR ($CDCl_3$): 8.92(d, 4H), 8.85(d, 2H), 8.45(d, 4H), 8.43(d, 2H), 7.89(d, 4H), 7.76(d, 2H), 4.23(q, 8H), 4.15(q, 4H), 3.42~3.11(m, 12H), 1.27(t, 12H), 1.26(t, 6H)

Diethyl 5,5'-((2-((5-(ethoxycarbonyl)pyridin-3-yl)(2-((5-(ethoxycarbonyl)pyridin 3-yl)(2-((5-(ethoxycarbonyl)pyridin-3-yl)(2-(ethoxycarbonyl)pyridin-4-yl)amino)ethyl)amino)ethyl)amino)ethyl)azanediyl)dinicotinate (19.8 g), NaOH (5.3 g), methanol (160 ml) and purified water (120 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (160 ml). The extracted organic layer was treated with $MgSO_4$. 13.0 g of the title compound was obtained(Yield: 78.4%).

$^1$H NMR (DMSO): 8.95(d, 4H), 8.87(d, 2H), 8.46(d, 4H), 8.44(d, 2H), 7.89(d, 4H), 7.75(d, 2H), 3.41~3.11 (m, 12H)

**Embodiment 4**

**Preparation of 5,5',5",5"'-(((ethane-1,2-diylbis((5-carboxyfuran-2-yl)azanediyl))bis(ethane-2,1-diyl))bis(azanetriyl))tetrakis(furan-2-carboxylic acid) (Formula (1h))**

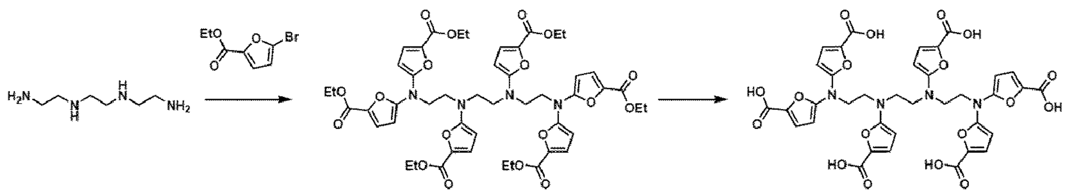

**(1h)**

Triethylenetetramine (10.0 g), ethyl 5-bromofuran-2-carboxylate (103.3 g), t-BuONa (46.0 g) and toluene (600 ml) were added, stirred, and then heated to 35°C. 50% $(t\text{-}Bu)_3P$ toluene solution (2.8 g) was added, stirred for about 30 min and then heated to 50°C. $Pd(dba)_2$ (2.0 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 25.3 g of tetraethyl 5,5',5",5'"-(((ethane-1,2-diylbis((5-(ethoxycarbonyl)furan-2-yl)azanediyl))bis(ethane-2,1-diyl))bis(azanetriyl))tetrakis(furan-2-carboxylate) was obtained(Yield: 37.9%).

$^1$H NMR ($CDCl_3$): 7.42(m, 12H), 4.31(q, 8H), 4.28(q, 4H), 3.65~3.15(m, 12H), 1.27(t, 12H), 1.25(t, 6H)

Tetraethyl 5,5',5",5'"-(((ethane-1,2-diylbis((5-(ethoxycarbonyl)furan-2-yl)azanediyl))bis (ethane-2,1-diyl))bis(azanetriyl))tetrakis(furan-2-carboxylate) (25.3 g), NaOH (7.2 g), methanol (200 ml) and purified water (150 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (200 ml). The extracted organic layer was treated with $MgSO_4$. 15.0 g of the title compound was obtained(Yield: 71.8%).

$^1$H NMR (DMSO): 7.41(m, 12H), 3.67~3.15(m, 12H)

**<u>Synthesis of cyclen derivative</u>**

**Embodiment 5**

**Preparation of 2,2',2",2"'-(1,4,7,10-tetraazacyclododecane-1,4,7,10-tetrayl)tetraacetic acid (Formula (2e))**

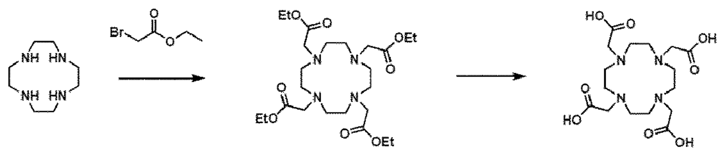

(2e)

Cyclen (10.0 g) was dissolved in acetonitrile (400 ml). $K_2CO_3$ (40.1 g) and ethyl bromoacetate (42.7 g) were added and reaction mixture was heated under stirring and under reflux for about 40 hours. After completion of the reaction, the reaction mixture was cooled to room temperature, and then filtered. A solid phase of the reaction mixture was discarded and the filtrate was concentrated under vacuum. MC (200 ml) and purified water (300 ml) are added to the concentrate and stirred for 30 min, and then an organic layer is separated. The organic layer was treated with $MgSO_4$, concentrated under vacuum, and then subjected to column purification with MC-methanol. 15.7 g of tetraethyl 2,2',2",2"'-(1,4,7,10-tetraazacyclododecane-1,4,7,10-tetrayl)tetraacetate was obtained(Yield: 52.3%).
$^1$H NMR ($CDCl_3$): 4.19(q, 8H), 3.19(s, 8H), 2.48(s, 16H), 1.27(t, 12H)

Tetraethyl 2,2',2",2"'-(1,4,7,10-tetraazacyclododecane-1,4,7,10-tetrayl)tetraacetate (15.7 g), NaOH (5.6 g), methanol (95 ml) and purified water (60 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (200 ml). The extracted organic layer was treated with $MgSO_4$. 9.9 g of the title compound was obtained(Yield: 80.5%).
$^1$H NMR (DMSO): 3.88(s, 8H), 3.23(s, 16H)

## Embodiment 6

**Preparation of 4,4',4",4"'-(1,4,7,10-tetraazacyclododecane-1,4,7,10-tetrayl)tetrabenzoic acid (Formula (2f))**

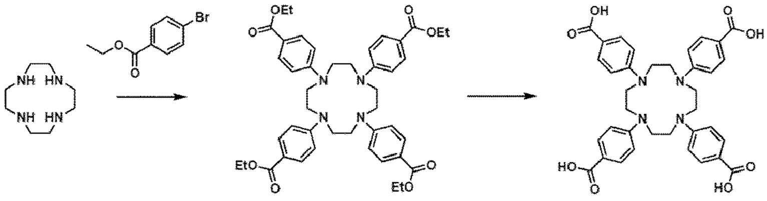

(2f)

Cyclen (10.0 g), ethyl 4-bromobenzoate (58.5 g), t-BuONa (27.9 g) and toluene (400ml) were added, stirred, and then heated to 35°C. 50% $(t\text{-}Bu)_3P$ toluene solution (2.4 g) was added, stirred for about 30 min and then heated to 50°C. $Pd(dba)_2$ (1.7 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 15.8 g of tetraethyl 4,4',4",4"'-(1,4,7,10-tetraazacyclododecane-1,4,7,10-tetrayl)tetrabenzoate was obtained(Yield: 35.6%)
$^1$H NMR ($CDCl_3$): 7.81(d, 8H), 6.98(d, 8H), 4,15(q, 8H), 3.48(s, 16H), 1,25(t, 12H)

Tetraethyl 4,4',4",4"'-(1,4,7,10-tetraazacyclododecane-1,4,7,10-tetrayl)tetrabenzoate (15.8 g), NaOH (3.8 g), methanol (130 ml) and purified water (100 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (130 ml). The extracted organic layer was treated with $MgSO_4$. 11.5 g of the title compound was obtained(Yield: 85.2%).
$^1$H NMR (DMSO): 7.82(d, 8H), 6.97(d, 8H), 3.45(s, 16H)

**Embodiment** 7

**Preparation of 5,5',5",5"'-(1,4,7,10-tetraazacyclododecane-1,4,7,10-tetrayl)tetranicotinic acid (Formula (2g))**

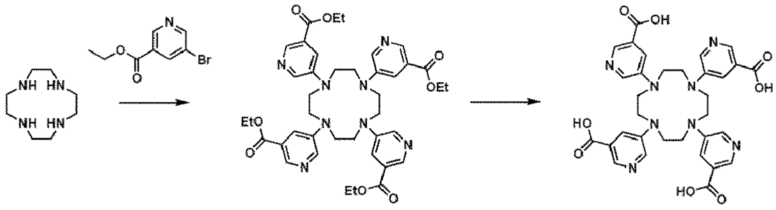

**(2g)**

Cyclen (10.0 g), 5-bromonicotinate (58.7 g), t-BuONa (27.9 g) and xylene (400ml) were added, stirred, and then heated to 35°C. 50% $(t\text{-}Bu)_3P$ toluene solution (2.4 g) was added, stirred for about 30 min and then heated to 50°C. $Pd(dba)_2$ (1.7 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 17.9 g of tetraethyl 5,5',5",5"'-(1,4,7,10-tetraazacyclododecane-1,4,7,10-tetrayl)tetranicotinate was obtained(Yield: 40.1%)
$^1H$ NMR ($CDCl_3$): 8.95(d, 4H), 8.46(d, 4H), 7.83(d, 4H), 4,21(q, 8H), 3.38(s, 16H), 1,24(t, 12H)

Tetraethyl 5,5',5",5"'-(1,4,7,10-tetraazacyclododecane-1,4,7,10-tetrayl)tetranicotinate (17.9 g), NaOH (4.3 g), methanol (150 ml) and purified water (110 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (160 ml). The extracted organic layer was treated with $MgSO_4$. 11.6 g of the title compound was obtained(Yield: 75.6%).
$^1H$ NMR (DMSO): 8.96(d, 4H), 8.44(d, 4H), 7.84(d, 4H), 3.36(s, 16H)

**Embodiment 8**

**Preparation of 5,5',5",5"'-(1,4,7,10-tetraazacyclododecane-1,4,7,10-tetrayl)tetrakis(furan-2-carboxylic acid) (Formula (2h))**

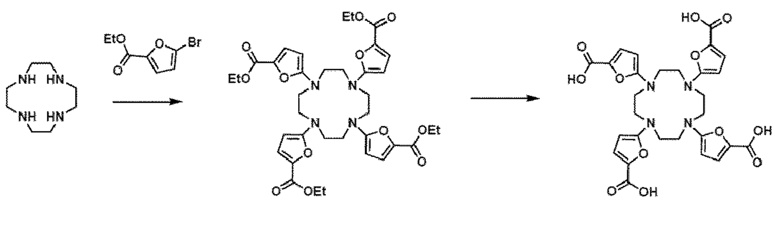

**(2h)**

Cyclen (10.0 g), ethyl 5-bromofuran-2-carboxylate (56.0 g), t-BuONa (27.9 g) and toluene (400ml) were added, stirred, and then heated to 35°C. 50% $(t\text{-}Bu)_3P$ toluene solution (2.4 g) was added, stirred for about 30 min and then heated to 50°C. $Pd(dba)_2$ (1.7 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 12.6 g of tetraethyl 5,5',5",5"'-(1,4,7,10-tetraazacyclododecane-1,4,7,10-tetrayl)tetrakis(furan-2-carboxylate) was obtained(Yield: 30.0%)
$^1H$ NMR ($CDCl_3$): 7.39(d, 8H), 4.35(q, 8H), 3.28(s, 16H), 1,35(t, 12H)

Tetraethyl 5,5',5",5"'-(1,4,7,10-tetraazacyclododecane-1,4,7,10-tetrayl)tetrakis(furan-2-carboxylate) (12.6 g),

NaOH (3.2 g), methanol (100 ml) and purified water (75 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (100 ml). The extracted organic layer was treated with $MgSO_4$. 7.9 g of the title compound was obtained(Yield: 73.9%).
$^1H$ NMR (DMSO): 7.40(d, 8H), 3.29(s, 16H)

**Synthesis of cyclam derivative**

### Embodiment 9

**Preparation of 2,2',2'',2'''-(1,4,8,11-tetraazacyclotetradecane-1,4,8,11-tetrayl)tetraacetic acid (Formula (3e))**

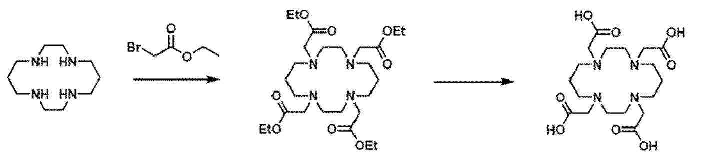

(3e)

Cyclam (10.0 g) was dissolved in acetonitrile (400 ml). $K_2CO_3$ (34.5 g) and ethyl bromoacetate (36.7 g) were added and reaction mixture was heated under stirring and under reflux for about 40 hours. After completion of the reaction, the reaction mixture was cooled to room temperature, and then filtered. A solid phase of the reaction mixture was discarded and the filtrate was concentrated under vacuum. MC (200 ml) and purified water (300 ml) are added to the concentrate and stirred for 30 min, and then an organic layer is separated. The organic layer was treated with $MgSO_4$, concentrated under vacuum, and then subjected to column purification with MC-methanol. 15.4 g of tetraethyl 2,2"2",2"'-(1,4,8,11-tetraazacyclotetradecane-1,4,8,11-tetrayl)tetraacetate was obtained(Yield: 56.8%).
$^1H$ NMR ($CDCl_3$): 4.12(q, 8H), 3.36(s, 8H), 2,69~2.73(m, 16H), 1,60(m, 4H), 1.26(t, 12H)

Tetraethyl 2,2',2",2"'-(1,4,8,11-tetraazacyclotetradecane-1,4,8,11-tetrayl)tetraacetate (15.4 g), NaOH (5.2 g), methanol (90 ml) and purified water (60 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (200 ml). The extracted organic layer was treated with $MgSO_4$. 9.3 g of the title compound was obtained(Yield: 75.9%).
$^1H$ NMR ($D_2O$): 3.51(s, 8H), 3.14(s, 8H), 3.07(t, 8H), 1.85(q, 4H)

### Embodiment 10

**Preparation of 4,4',4",4'"-(1,4,8,11-tetraazacydotetradecane-1,4,8,11-tetrayl)tetrabenzoic acid (Formula (3f))**

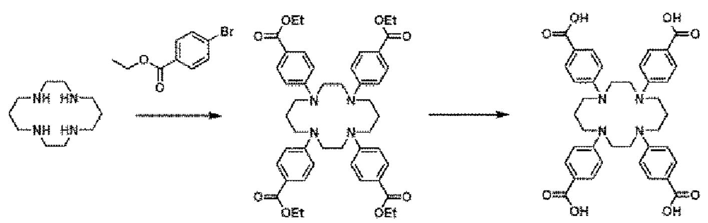

(3f)

Cyclam (10.0 g), ethyl 4-bromobenzoate (50.3 g), t-BuONa (24.0 g) and toluene (400ml) were added, stirred, and then heated to 35°C. 50% $(t\text{-}Bu)_3P$ toluene solution (2.0 g) was added, stirred for about 30 min and then heated to 50°C. $Pd(dba)_2$ (1.5 g) was added, heated under reflux. After completion of the reaction, the reaction mixture was cooled

to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 12.3 g of tetraethyl 4,4',4",4'"-(1,4,8,11-tetraazacyclotetradecane-1,4,8,11-tetrayl)tetrabenzoate was obtained(Yield: 31.0%)

$^1$H NMR ($CDCl_3$): 7.80(d, 8H), 6.94(d, 8H), 4.13(q, 8H), 2,65~2.71(m, 16H), 1,65(m, 4H), 1.26(t, 12H)

Tetraethyl 4,4',4'',4'''-(1,4,8,11-tetraazacyclotetradecane-1,4,8,11-tetrayl)tetrabenzoate (12.3 g), NaOH (2.6 g), methanol (70 ml) and purified water (100 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (100 ml). The extracted organic layer was treated with $MgSO_4$. 8.6 g of the title compound was obtained(Yield: 81.2%).

$^1$H NMR (DMSO): 7.83(d, 8H), 6.95(d, 8H), 2,63~2.73(m, 16H), 1,62(m, 4H)

**Embodiment 11**

**Preparation of 5,5',5",5"'-(1,4,8,11-tetraazacyclotetradecane-1,4,8,11-tetrayl)tetranicotinic acid (Formula (3g))**

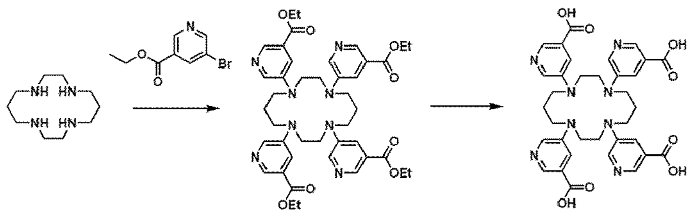

**(3g)**

Cyclam (10.0 g), ethyl 5-bromonicotinate (50.3 g), t-BuONa (24.0 g) and xylene (400ml) were added, stirred, and then heated to 35°C. 50% $(t\text{-}Bu)_3P$ toluene solution (2.0 g) was added, stirred for about 30 min and then heated to 50°C. $Pd(dba)_2$ (1.5 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 11.1 g of tetraethyl 5,5',5",5"'-(1,4,8,11-tetraazacyclotetradecane-1,4,8,11-tetrayl)tetranicotinate was obtained(Yield: 27.8%)

$^1$H NMR ($CDCl_3$): 8.91(d, 4H), 8.37(d, 4H), 7.85(d, 4H), 4.15(q, 8H), 2.67~2.64(m, 16H), 1,71(m, 4H), 1.24(t, 12H)

Tetraethyl 5,5',5'',5'''-(1,4,8,11-tetraazacyclotetradecane-1,4,8,11-tetrayl)tetranicotinate (11.1 g), NaOH (2.6 g), methanol (90 ml) and purified water (70 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (120 ml). The extracted organic layer was treated with $MgSO_4$. 7.4 g of the title compound was obtained(Yield: 77.6%).

$^1$H NMR (DMSO): 8.93(d, 4H), 8.38(d, 4H), 7.85(d, 4H), 2.67~2.66(m, 16H), 1,72(m, 4H)

**Embodiment 12**

**Preparation of 5,5',5",5"'-(1,4,8,11-tetraazacyclotetradecane-1,4,8,11-tetrayl)tetrakis(furan-2-carboxylic acid) (Formula (3h))**

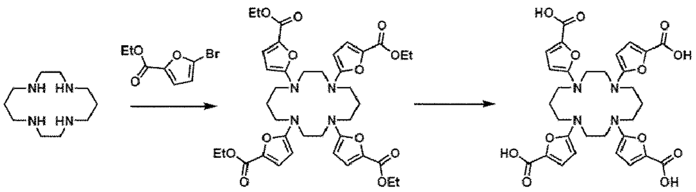

**(3h)**

Cyclam (10.0 g), ethyl 5-bromofuran-2-carboxylate (48.1 g), t-BuONa (24.0 g) and toluene (400ml) were added, stirred, and then heated to 35°C. 50% $(t\text{-}Bu)_3P$ toluene solution (2.0 g) was added, stirred for about 30 min and then heated to 50°C. $Pd(dba)_2$ (1.5 g) was added, heated under reflux. After completion of the reaction, the reaction mixture was cooled to room temperature. a purified water (1000 ml) was added, stirred for 30 min, and then an organic layer is separated. An aqueous layer of the reaction mixture was discarded. The organic layer was treated with $MgSO_4$, concentrated under vacuum, and then subjected to column purification with MC-methanol. 14.1 g of tetraethyl 5,5',5",5"'-(1,4,8,11-tetraazacyclotetradecane-1,4,8,11-tetrayl)tetrakis(furan-2-carboxylate) was obtained(Yield: 37.5%)
$^1H$ NMR ($CDCl_3$): 7.40(d, 8H), 4.23(q, 8H), 2,65~2.71(m, 16H), 1,66(m, 4H), 1.29(t, 12H)

Tetraethyl 5,5',5",5"'-(1,4,8,11-tetraazacyclotetradecane-1,4,8,11-tetrayl)tetrakis(furan-2-carboxylate) (14.1 g), NaOH (3.5 g), methanol (110 ml) and purified water (85 ml) were added and the reaction mixture was heated to 55-60°C, stirred for 12 hours. After completion of the reaction, the reaction mixture was cooled to about 40°C and concentrated under vacuum. The solvent was removed. The reaction mixture was adjusted to pH 5-6 with 10% aqueous HCl, stirred for 30 min, and extracted with MC (120 ml). The extracted organic layer was treated with $MgSO_4$. 9.4 g of the title compound was obtained(Yield: 78.1%).
$^1H$ NMR (DMSO): 7.41(d, 8H), 2.69~2.72(m, 16H), 1.68(m, 4H)

**Experimental Example 1: Heavy metal removal ability test in contaminated soil**

(1) Preparation of soil contaminated with heavy metal

$Pb(NO_3)_2$ 162.1mg, $Cd(NO_3)_2$ 211.2mg, $Zn(NO_3)_2$ 292.3mg, respectively, was added to 1L distilled water to prepare 100ppm aqueous solutions of heavy metal, respectively.

After collecting and pulverizing uncontaminated soil, fine particles obtained by using a mesh were mixed with the aqueous heavy metal solution to prepare soil samples contaminated with heavy metals.

(2) Experiment

0.5g, 1.0g, and 2.0g of trientine, cyclen, cyclam and the derivative compounds prepared in Embodiments 1 to 12 were added to 100ml distilled water to prepare 0.5 wt%, 1.0 wt% and 2.0 wt% of aqueous solutions for restoring soil, respectively. 0.5 wt% of aqueous EDTA (ethylenediaminetetraacetic acid) was prepared as a control.

Each 3 ml of the prepared aqueous solution was added to a soil sample contaminated with heavy metals and mixed for 5 minutes.

50 ml of distilled water was added to the contaminated soil mixed with the aqueous solution for restoring soil, stirred for 20 minutes, and settled for 1 hour, and a supernatant was prepared as a sample solution.

The prepared sample solution was analyzed for the heavy metal component using an Inductively Coupled Plasma Mass Spectrometer (ICP-MS) (Xseries™ 2, Thermo Fisher Scientific, UK).

In ICP-MS, the specific mass-to-charge ratio (m/z) of arsenic (As) is 75, that of cadmium (Cd) is 114, and that of nickel (Ni) is 60. The adsorption rate of heavy metals was calculated in comparison with control according to the following Equation 1, and the test result is shown in Table 1.

**Equation 1**

$$\text{Adsorption rate of heavy metals (\%)} = (\text{Adsorption amount of Embodiment / Adsorption amount of Control}) \times 100$$

Table 1

| Samples | | Arsenic (As) | | Cadmium (Cd) | | Nickel (Ni) | |
|---|---|---|---|---|---|---|---|
| Active ingredient | Content | Adsorptio n amount (ppm) | Adsorptio n rate | Adsorptio n amount (ppm) | Adsorpti on rate | Adsorptio n amount (ppm) | Adsorpti on rate |
| Trientine | 0.5% | 49 | 196% | 68 | 166% | 102 | 208% |
| | 1.0% | 52 | 208% | 75 | 183% | 115 | 235% |
| | 2.0% | 59 | 236% | 79 | 193% | 131 | 267% |
| Embodiment 1 | 0.5% | 48 | 192% | 74 | 180% | 91 | 186% |
| | 1.0% | 50 | 200% | 79 | 193% | 101 | 206% |
| | 2.0% | 53 | 212% | 84 | 205% | 112 | 229% |
| Embodim ent 2 | 0.5% | 48 | 192% | 75 | 183% | 94 | 192% |
| | 1.0% | 49 | 196% | 86 | 210% | 96 | 196% |
| | 2.0% | 53 | 212% | 88 | 215% | 103 | 210% |
| Embodim ent 3 | 0.5% | 48 | 192% | 75 | 183% | 89 | 182% |
| | 1.0% | 53 | 212% | 84 | 205% | 99 | 202% |
| | 2.0% | 58 | 232% | 86 | 210% | 106 | 216% |
| Embodim ent 4 | 0.5% | 53 | 212% | 67 | 163% | 91 | 186% |
| | 1.0% | 56 | 224% | 74 | 180% | 94 | 192% |
| | 2.0% | 56 | 224% | 80 | 195% | 104 | 212% |
| Cyclen | 0.5% | 42 | 168% | 69 | 168% | 91 | 186% |
| | 1.0% | 49 | 196% | 74 | 180% | 93 | 190% |
| | 2.0% | 51 | 204% | 81 | 198% | 98 | 200% |
| Embodim ent 5 | 0.5% | 41 | 164% | 60 | 146% | 83 | 169% |
| | 1.0% | 46 | 184% | 66 | 161% | 85 | 173% |
| | 2.0% | 53 | 212% | 74 | 180% | 89 | 182% |
| Embodim ent 6 | 0.5% | 42 | 168% | 61 | 149% | 81 | 165% |
| | 1.0% | 45 | 180% | 69 | 168% | 83 | 169% |
| | 2.0% | 48 | 192% | 77 | 188% | 87 | 178% |
| Embodim ent 7 | 0.5% | 41 | 164% | 62 | 151% | 92 | 188% |
| | 1.0% | 45 | 180% | 72 | 176% | 97 | 198% |
| | 2.0% | 51 | 204% | 76 | 185% | 102 | 208% |
| Embodim ent 8 | 0.5% | 39 | 156% | 61 | 149% | 86 | 176% |
| | 1.0% | 47 | 188% | 64 | 156% | 96 | 196% |
| | 2.0% | 49 | 196% | 71 | 173% | 99 | 202% |
| Cyclam | 0.5% | 38 | 152% | 60 | 146% | 81 | 165% |
| | 1.0% | 44 | 176% | 71 | 173% | 86 | 176% |
| | 2.0% | 52 | 208% | 74 | 180% | 93 | 190% |

(continued)

| Samples | | Arsenic (As) | | Cadmium (Cd) | | Nickel (Ni) | |
|---|---|---|---|---|---|---|---|
| Active ingredient | Content | Adsorptio n amount (ppm) | Adsorptio n rate | Adsorptio n amount (ppm) | Adsorpti on rate | Adsorptio n amount (ppm) | Adsorpti on rate |
| Embodim ent 9 | 0.5% | 42 | 168% | 61 | 149% | 76 | 155% |
| | 1.0% | 46 | 184% | 66 | 161% | 85 | 173% |
| | 2.0% | 48 | 192% | 70 | 171% | 96 | 196% |
| Embodim ent 10 | 0.5% | 39 | 156% | 58 | 141% | 79 | 161% |
| | 1.0% | 42 | 168% | 65 | 159% | 92 | 188% |
| | 2.0% | 46 | 184% | 71 | 173% | 94 | 192% |
| Embodim ent 11 | 0.5% | 38 | 152% | 59 | 144% | 79 | 161% |
| | 1.0% | 41 | 164% | 66 | 161% | 88 | 180% |
| | 2.0% | 47 | 188% | 70 | 171% | 93 | 190% |
| Embodim ent 12 | 0.5% | 41 | 164% | 61 | 149% | 77 | 157% |
| | 1.0% | 43 | 172% | 67 | 163% | 84 | 171% |
| | 2.0% | 46 | 184% | 72 | 176% | 89 | 182% |
| Control (EDTA) | - | 25 | | 41 | | 49 | |

As shown in Table 1, the compounds according to the embodiments of the present invention show that the adsorption rate of arsenic (Pb) is 152 to 232%, the adsorption rate of cadmium (Cd) is 141 to 215% and the adsorption rate of nickel (Ni) is 155 to 267% in comparison with the control. It was confirmed that the adsorption rate of heavy metals significantly increased as the content of the active ingredient increased. This means that the compound for restoring soil according to the present invention has a significantly superior heavy metal removal effect compared to the control.

**Experimental Example 2: Heavy metal removal ability test in contaminated soil around a factory**

The contaminated soil around the factory in the industrial complex was collected, pulverized, and meshed to prepare fine particles of soil samples.

Trientine, cyclen, cyclam, and the derivative compounds prepared in Embodiments 1 to 12 were respectively added to distilled water to prepare 1.0 wt% aqueous solutions for restoring soil. 1.0 wt% aqueous solutions of EDTA (ethylenediaminetetraacetic acid) was prepared as a control.

Each 3 ml of aqueous solutions for restoring soil was added to soil samples and mixed for 5 minutes.

50 ml of distilled water was added to the mixture of the contaminated soil and aqueous solution for restoring soil, stirred for 20 minutes, settled for 1 hour, and then the total amount of heavy metals (Cu, Zn, Mn, Ni, Cd) in the aqueous solution of contaminated soil were measured with test kit (WAK-Me™, Kyoritsu Chemical-Check Lab, Japan).

The total amounts of heavy metals were measured by comparing the color of the aqueous solution with the standard color, and the results are shown in Table 2.

(Yellow) 0 ppm 0.2 ppm 0.5 ppm 1.0 ppm 2.0 ppm ≤5 ppm (red)

**Table 2**

| Active ingredient | Total amount (Cu, Zn, Mn, Ni, Cd) (ppm) |
|---|---|
| Trientine | ≤5 (red) |
| Embodiment 1 | ≤5 |
| Embodiment 2 | ≤5 |
| Embodiment 3 | ≤5 |

(continued)

| Active ingredient | Total amount (Cu, Zn, Mn, Ni, Cd) (ppm) |
|---|---|
| Embodiment 4 | ≤5 |
| Cyclen | ≤5 |
| Embodiment 5 | ≤5 |
| Embodiment 6 | ≤5 |
| Embodiment 7 | ≤5 |
| Embodiment 8 | ≤5 |
| Cyclam | ≤5 |
| Embodiment 9 | ≤5 |
| Embodiment 10 | ≤5 |
| Embodiment 11 | ≤5 |
| Embodiment 12 | ≤5 |
| Untreated | 2.0 |

As shown in Table 2, the total amount of heavy metals in the filter of Comparative Example 1 was 2.0 ppm, but the total amount of heavy metals in the filter according to the present invention was 5 ppm or more (≤5). It can be confirmed that the adsorption capacity of heavy metals of the filters according to the present invention is remarkable.

**Experimental Example 3: Formaldehyde(formalin) removing ability test**

Purified water was added to 35.0% formaldehyde(formalin) solution to prepare a 2.0% diluted solution of formaldehyde. 3 molar equivalents of Trientine, cyclen, cyclam, and derivative compounds of the present invention were added to the diluted solution, and the change of amount of formaldehyde was analyzed by gas chromatography (GC) while stirring at room temperature .

The content of formaldehyde was measured under the following analysis conditions in the initial state, after 30 min and 180 min, the result was shown in Table 3.

<GC analysis conditions>

- Detector: Flame ionization detector
- Column: ZB-1 (0.32 mm x 30 m, 3.00 m) or a similar column.
- Headspace conditions: equilibrium temperature 60 °C, equilibration time 10 min, transfer line temperature 65 °C
- Column temperature: Keep at 50 °C for the first 5 min, then increase the temperature to 200 °C by 30 °C per minute and maintain at 200 °C for 10 min.
- Sample inlet temperature: constant temperature around 140 °C.
- Detector temperature: constant temperature around 250 °C.
- Carrier gas: nitrogen
- Split ratio: about 1:20
- Flow rate: 2.5 mL/min
- Injection amount: 5 μL of the sample solution is injected into the vial with microsyringe. 1 mL of the vapor phase is injected into the column according to the head space conditions.
- Analysis time: 20 min

**Table 3**

| Active ingredient | Area (mAU*min) | | |
|---|---|---|---|
| | Initial | 30 min | 180 min |
| Trientine | 0.305 | 0.168 | 0 |
| Embodiment 1 | 0.305 | 0.170 | 0 |
| Embodiment 2 | 0.305 | 0.168 | 0 |
| Embodiment 3 | 0.305 | 0.171 | 0 |
| Embodiment 4 | 0.305 | 0.173 | 0 |
| Cyclen | 0.305 | 0.181 | 0 |
| Embodiment 5 | 0.305 | 0.179 | 0 |
| Embodiment 6 | 0.305 | 0.183 | 0 |
| Embodiment 7 | 0.305 | 0.181 | 0 |
| Embodiment 8 | 0.305 | 0.168 | 0 |
| Cyclam | 0.305 | 0.172 | 0 |
| Embodiment 9 | 0.305 | 0.182 | 0 |
| Embodiment 10 | 0.305 | 0.171 | 0 |
| Embodiment 11 | 0.305 | 0.174 | 0 |
| Embodiment 12 | 0.305 | 0.170 | 0 |

As shown in Table 3, GC analysis shows that the formaldehyde was remarkably reduced by about 40% to 45% in 30 min after the addition of the compounds of the present invention and completely undetected after 180 min. This means that the active ingredient of the present invention adsorbs effectively with formaldehyde, and that the composition of the present invention can be effectively used for removing formaldehyde, which is an environmental hormone and a very toxic substance.

**Experimental Example 4: Skin irritation test of active ingredient**

A total of 20 people (10 men and 10 women in their 20s and 30s) were tested for skin irritation using the patch method according to the guidelines of CTFA (The Cosmetic, Toiletry & Fragrance Association, Inc. D.C., 20036, 1991).

A filter paper disk was placed in an 8 mm diameter, 10 panels of pin chamber. Then, 20 $\mu\ell$ each of the compositions according to Experimental Example 1 was dropped on a filter paper disk, naturally dried for 10 min, and then the pin chambers were attached to the subject's back region with a Scanpor tape.

After 24 hours, the pin chamber was removed, and skin conditions were visually observed. The degree and grade for skin irritation were calculated according to the following Equation 2, and the results are shown in Table 4 below.

$$\text{Degree of irritation} = \frac{[(\pm)\ \text{No.}\times 1 + (+)\ \text{No.}\times 2 + (++)\ \text{No.}\times 3\ ]}{\text{Total number of subject}}$$

**Equation 2**

[Criteria for skin irritation]

(-): No erythema or particularly no symptoms; (±): slightly reddish than the periphery; (+): Apparent reddening than periphery; (++): More reddened and swollen than periphery.

[Grade for skin irritation]

Degree of irritation 0-0.1: Grade I (unstimulated);
Degree of irritation 0.11-0.3: Grade II (weakly stimulated);
Degree of irritation 0.31-0.5: Grade III (moderately stimulated);
Degree of irritation 0.51 or more: Grade IV (strongly stimulated)

**Table 4**

| **Samples** | | **Test result(number of subject)** | | | | **Degree of irritation** | **Grade** |
|---|---|---|---|---|---|---|---|
| Active ingredient | Content (Wt%) | (-) | (±) | (+) | (++) | | |
| Trientine | 0.1% | 20 | 0 | 0 | 0 | 0 | I |
| | 0.5% | 19 | 1 | 0 | 0 | 0.05 | I |
| | 1.0% | 17 | 3 | 0 | 0 | 0.15 | II |
| Embodiment 1 | 0.1% | 20 | 0 | 0 | 0 | 0 | I |
| | 0.5% | 19 | 1 | 0 | 0 | 0.05 | I |
| | 1.0% | 16 | 4 | 0 | 0 | 0.20 | II |
| Embodiment 2 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Embodiment 3 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Embodiment 4 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Cyclen | 0.1% | 20 | 0 | 0 | 0 | 0 | I |
| | 0.5% | 20 | 0 | 0 | 0 | 0 | I |
| | 1.0% | 18 | 1 | 1 | 0 | 0.15 | II |
| Embodiment 5 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Embodiment 6 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Embodiment 7 | 0.1% | 20 | 0 | 0 | 0 | 0 | I |
| | 0.5% | 20 | 0 | 0 | 0 | 0 | I |
| | 1.0% | 20 | 0 | 0 | 0 | 0 | I |
| Embodiment 8 | 0.1% | 20 | 0 | 0 | 0 | 0 | I |
| | 0.5% | 20 | 0 | 0 | 0 | 0 | I |
| | 1.0% | 18 | 2 | 0 | 0 | 0.10 | I |

(continued)

| Samples | | Test result(number of subject) | | | | Degree of irritation | Grade |
|---|---|---|---|---|---|---|---|
| Active ingredient | Content (Wt%) | (-) | (±) | (+) | (++) | | |
| Cyclam | 0.1% | 20 | 0 | 0 | 0 | 0 | I |
| | 0.5% | 19 | 1 | 0 | 0 | 0.05 | I |
| | 1.0% | 17 | 3 | 0 | 0 | 0.15 | II |
| Embodiment 9 | 0.1% | 20 | 0 | 0 | 0 | 0 | I |
| | 0.5% | 20 | 0 | 0 | 0 | 0 | I |
| | 1.0% | 18 | 2 | 0 | 0 | 0.10 | I |
| Embodiment 10 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Embodiment 11 | 0.1% | 20 | 0 | 0 | 0 | 0 | I |
| | 0.5% | 20 | 0 | 0 | 0 | 0 | I |
| | 1.0% | 18 | 2 | 0 | 0 | 0.10 | I |
| Embodiment 12 | 0.1% | 20 | 0 | 0 | 0 | 0 | I |
| | 0.5% | 20 | 0 | 0 | 0 | 0 | I |
| | 1.0% | 19 | 1 | 0 | 0 | 0.05 | I |
| Comparative Example 1 (EDTA) | 0.1% | 20 | 2 | 0 | 0 | 0.10 | I |
| | 0.5% | 17 | 2 | 1 | 0 | 0.20 | II |
| | 1.0% | 15 | 3 | 2 | 0 | 0.35 | III |

As shown in Table 4, all of the compounds according to the present invention have grade I, which is a non-stimulating range, within the concentration range of 0.5 wt% in the human skin irritation test. In the concentration range of 1.0 wt%, trientine, cyclen and cyclam have grade II (light stimulus range), whereas all of these aromatic and heterocyclic derivatives have grade I, indicating that skin irritation reduction is improved. On the other hand, The EDTA of Comparative Example 1 was evaluated to be grade III (moderate irritation range) at a concentration of 1.0 wt%, indicating that the skin irritation is higher than those of the compounds of the present invention. Therefore, the compound according to the present invention is harmless to the human body and is environmental-friendly for restoring contaminated soil and contaminated water.

## INDUSTRIAL APPLICABILITY

The present invention can be effectively used for restoring contaminated soil or contaminated water by removing heavy metals and formaldehyde contained in soil or water.

## Claims

1. A composition for restoring contaminated soil or contaminated water for the removal of heavy metals and formaldehyde, comprising at least one selected from the group consisting of trientine or trientine derivative of Formula (1), cyclen or cyclen derivative of Formula (2), cyclam or cyclam derivative of Formula (3) as an active ingredient.

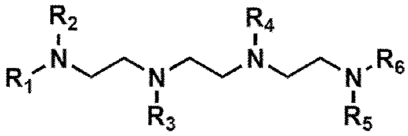

(1)

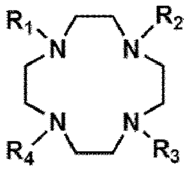

(2)

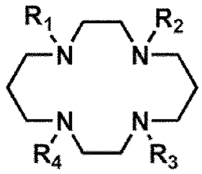

(3)

wherein: $R_1$, $R_2$, $R_3$, $R_4$, $R_5$ and $R_6$ is each independently hydrogen, $-R_7$-COOH and salts thereof;
$R_7$ is a $C_1$-$C_5$ alkyl group, an unsubstituted or substituted aromatic hydrocarbon group, or an unsubstituted or substituted aromatic 6 membered or 5 membered heterocyclic ring.

2. The composition of claim 1, wherein active ingredient for removing heavy metals is selected from trientine of Formula (1a), cyclen of Formula (2a), cyclam of Formula (3a) or salts thereof.

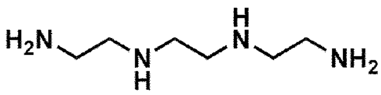

(1a)

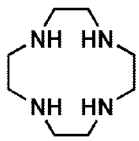

(2a)

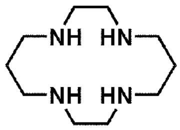

(3a)

3. The composition of claim 1, wherein the trientine derivative is selected from the group consisting of Formula (1b), Formula (1c), Formula (1d) and a salt thereof.

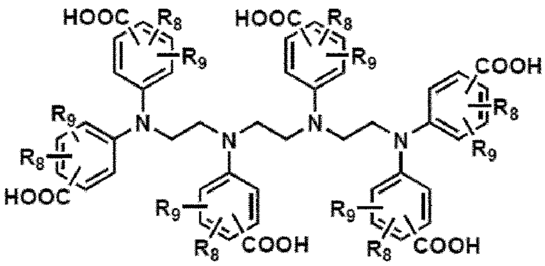

(1b)

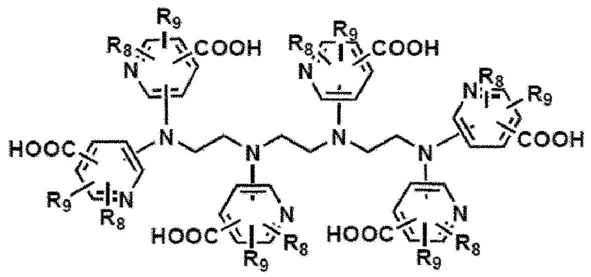

(1c)

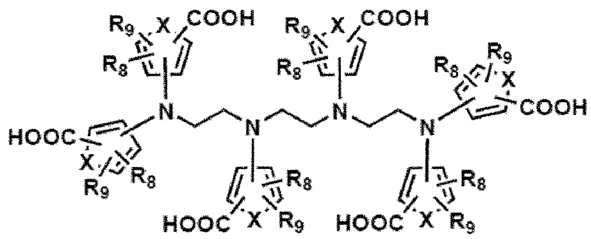

(1d)

wherein: $R_8$, $R_9$ is each independently hydrogen or $C_1$-$C_4$ alkyl;
X is oxygen(O), sulfur(S) or nitrogen(N).

**4.** The composition of claim 1, wherein the cyclen derivative is selected from the group consisting of Formula (2b), Formula (2c), Formula (2d) and a salt thereof.

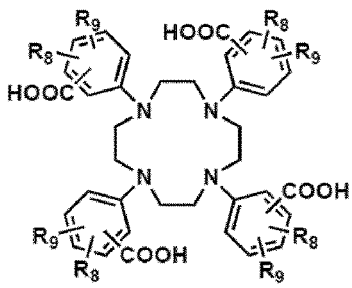

(2b)

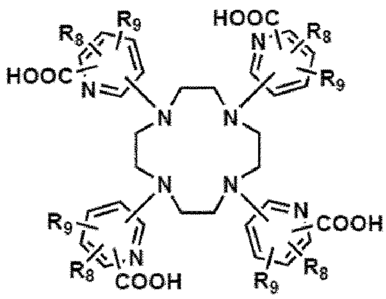

(2c)

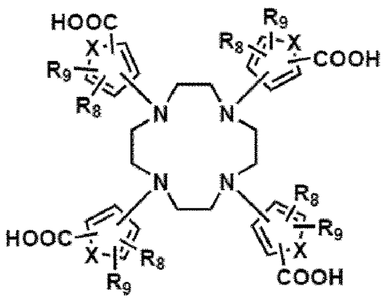

(2d)

wherein: $R_8$, $R_9$ is each independently hydrogen or $C_1$-$C_4$ alkyl;
X is oxygen(O), sulfur(S) or nitrogen(N).

**5.** The composition of claim 1, wherein the cyclam derivative is selected from the group consisting of Formula (3b), Formula (3c), Formula (3d) and a salt thereof.

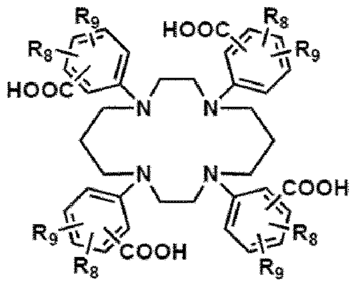

**(3b)**

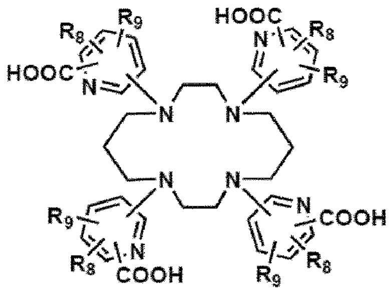

**(3c)**

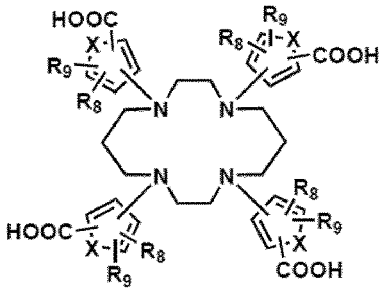

**(3d)**

wherein: $R_8$, $R_9$ is each independently hydrogen or $C_1$-$C_4$ alkyl;
X is oxygen(O), sulfur(S) or nitrogen(N).

**6.** The composition of claim 1, wherein the trientine derivative is selected from the group consisting of Formula (1e), Formula (1f), Formula (1g), Formula (1h) and a salt thereof.

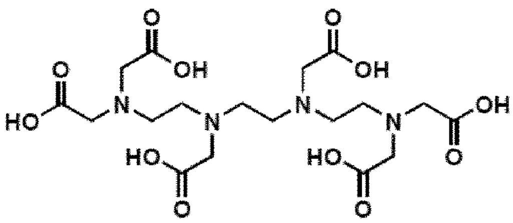

**(1e)**

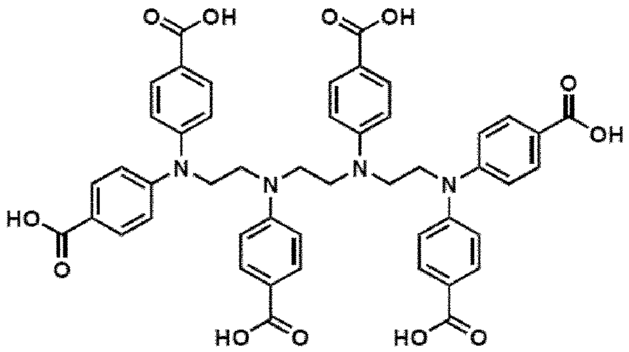

(1f)

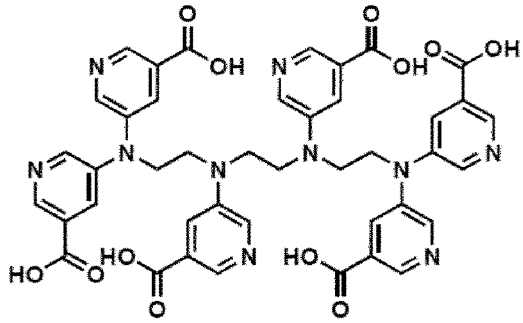

(1g)

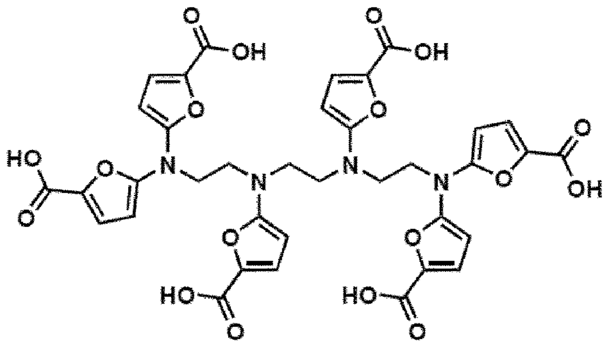

(1h)

7. The composition of claim 1, wherein the cyclen derivative is selected from the group consisting of Formula (2e), Formula (2f), Formula (2g), Formula (2h) and a salt thereof.

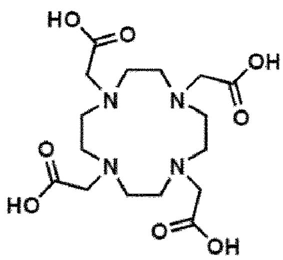

(2e)

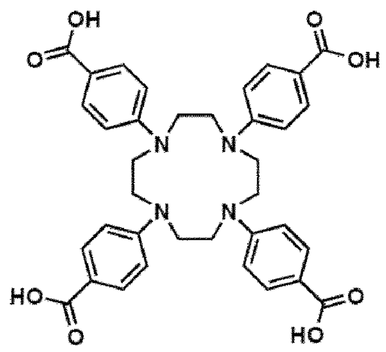

(2f)

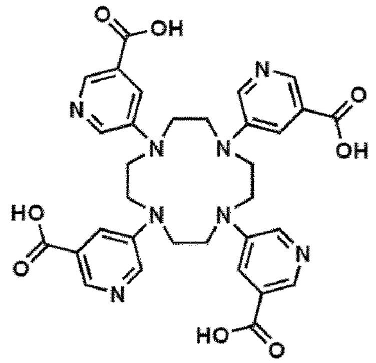

(2g)

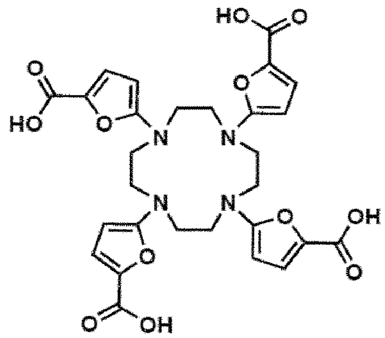

(2h)

**8.** The composition of claim 1, wherein the cyclam derivative is selected from the group consisting of Formula (3e), Formula (3f), Formula (3g), Formula (3h) and a salt thereof.

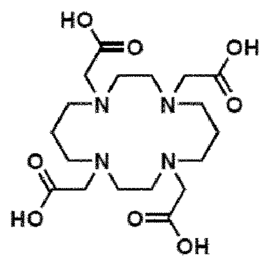

(3e)

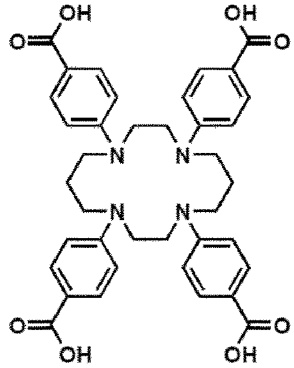

(3f)

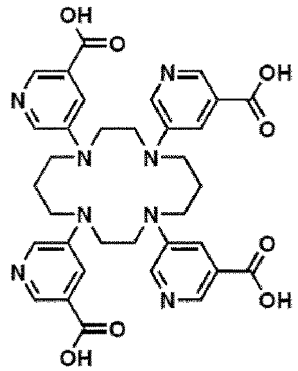

(3g)

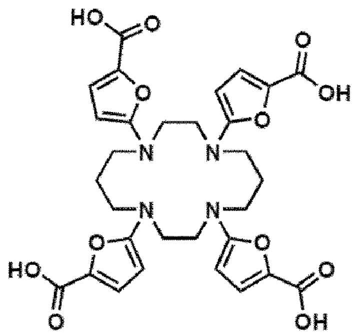

(3h)

**9.** The detergent composition of claim 1, wherein the heavy metal is selected from the group consisting of mercury, lead, cadmium, arsenic, chromium, copper, nickel, zinc, manganese, cobalt, tin, cesium-137, uranium-234, radium-226, iridium-192, plutonium-238.

## INTERNATIONAL SEARCH REPORT

International application No.
PCT/KR2019/004427

A. CLASSIFICATION OF SUBJECT MATTER

***B09C 1/08(2006.01)i, C02F 1/28(2006.01)i, C02F 1/62(2006.01)i***

According to International Patent Classification (IPC) or to both national classification and IPC

B. FIELDS SEARCHED

Minimum documentation searched (classification system followed by classification symbols)
B09C 1/08; B01D 15/00; B01J 20/26; B01J 45/00; C02F 1/04; C02F 1/62; G03C 5/00; C02F 1/28

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: trientine, cyclene, thiocyclam, heavy metal, infested soil

C. DOCUMENTS CONSIDERED TO BE RELEVANT

| Category* | Citation of document, with indication, where appropriate, of the relevant passages | Relevant to claim No. |
|---|---|---|
| X<br>A | LIU, Changkun et al. Functionalization of adsorbent with different aliphatic polyamines for heavy metal ion removal: Characteristics and performance. Journal of Colloid and Interface Science. 2010, vol. 345, pages 454-460<br>See abstract and page 454. | 1,2,9<br>3-8 |
| X | ACHOUR, B. et al. Triethylenetetramine-N,N,N',N'',N''',N'''-hexaacetic Acid (TTHA) and TTHA-Bis(butanamide) as Chelating Agents Relevant to Radiopharmaceutical Applications. Inorg. Chem. 1998, vol. 37, pages 2729-2740<br>See figure 1. | 1,6,9 |
| A | JP 08-015593 B2 (HAYASHI, Nobuo et al.) 21 February 1996<br>See paragraph [0002]. | 1-9 |
| A | JP 2003-508197 A (COMMISSARIAT A L'ENERGIE ATOMIQUE et al.) 04 March 2003<br>See claim 1. | 1-9 |
| A | JP 2011-513047 A (CENTRE NATIONAL DE LA RECHERCHE SCIENTIFIQUE (CNRS)) 28 April 2011<br>See claim 1. | 1-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 AUGUST 2019 (06.08.2019) | **06 AUGUST 2019 (06.08.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br>Telephone No. |

Form PCT/ISA/210 (second sheet) (January 2015)

INTERNATIONAL SEARCH REPORT

International application No.
PCT/KR2019/004427

C (Continuation). DOCUMENTS CONSIDERED TO BE RELEVANT

| Category* | Citation of document, with indication, where appropriate, of the relevant passages | Relevant to claim No. |
|---|---|---|
| A | GRUTTNER, C. et al. The potential of nano-and microparticles for the selective complexation and separation of metal ions/radionuclides. Organisation for Economic Co-Operation and Development. Nuclear Energy Agency. 2001, vol. 6, pages 649-657 See abstract. | 1-9 |

**INTERNATIONAL SEARCH REPORT**
Information on patent family members

International application No.
**PCT/KR2019/004427**

| Patent document cited in search report | Publication date | Patent family member | Publication date |
|---|---|---|---|
| JP 08-015593 B2 | 21/02/1996 | JP 06-226244 A | 16/08/1994 |
| JP 2003-508197 A | 04/03/2003 | AT 342770 T | 15/11/2006 |
| | | AU 2000-70166 A1 | 26/03/2001 |
| | | AU 7016600 A | 26/03/2001 |
| | | CA 2381853 A1 | 08/03/2001 |
| | | CA 2381853 C | 05/05/2009 |
| | | CN 1140352 C | 03/03/2004 |
| | | CN 1371305 A | 25/09/2002 |
| | | DK 1218104 T3 | 19/02/2007 |
| | | EP 1218104 A1 | 03/07/2002 |
| | | EP 1218104 B1 | 18/10/2006 |
| | | FR 2797786 A1 | 02/03/2001 |
| | | FR 2797786 B1 | 05/10/2001 |
| | | JP 5026648 B2 | 12/09/2012 |
| | | RU 2255806 C2 | 10/07/2005 |
| | | US 7083732 B1 | 01/08/2006 |
| | | WO 01-15806 A1 | 08/03/2001 |
| JP 2011-513047 A | 28/04/2011 | BR PI0906954 A2 | 14/07/2015 |
| | | EP 2259999 A1 | 15/12/2010 |
| | | EP 2259999 B1 | 27/06/2018 |
| | | FR 2928144 A1 | 04/09/2009 |
| | | FR 2928144 B1 | 04/09/2009 |
| | | JP 5298139 B2 | 25/09/2013 |
| | | US 2011-0079557 A1 | 07/04/2011 |
| | | US 8975395 B2 | 10/03/2015 |
| | | WO 2009-112736 A1 | 17/09/2009 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **F. W. SUNDERMAN et al.** *Toxicol. Appl. Pharmacol,* 1976, vol. 38, 177
- **J. M. WALSHE.** *Prog. Clin. Biol. Res.,* 1979, vol. 34, 271
- **R. H. HASLAM et al.** *Dev. Pharmacol Ther.,* 1980, vol. 1, 318